# EUROPÄISCHE PATENTANMELDUNG

(11) **EP 0 995 660 A1**
(43) Veröffentlichungstag der Anmeldung: **26.04.2000**
(21) Anmeldenummer: 98811049.0
(22) Anmeldetag: 21.10.1998
(51) Int. Cl.: B61B 15/00, B61B 13/10

(54) **Warenferntransportanlage**

(71) Anmelder: Steiner, Frank, 3210 Kerzers (CH)
(72) Erfinder: Steiner, Frank, 3210 Kerzers (CH)
(74) Vertreter: Roshardt, Werner Alfred, Dipl.-Phys.

(57) **Zusammenfassung**

Bei einer Warenferntransportanlage mit einem Verkehrsweg und einer Vielzahl von Transportfahrzeugen (10) sind die Transportfahrzeuge (10) als selbstfahrende Transporteinheiten zum führerlosen Fahren auf dem Verkehrsweg ausgebildet. Da bei den als selbstfahrende Transporteinheiten ausgebildeten Transportfahrzeugen (10) der erfindungsgemässen Warenferntransportanlage das Erfordernis nach einem hohen Minimalgewicht entfällt - im Gegensatz z.B. zu Eisenbahnwagen - können sie vergleichsweise leichtgewichtig ausgebildet sein. Durch den führerlosen Betrieb wird ein weitgehend beschleunigungs- und verzögerungsfreier Verkehrsfluss gewährleistet. Die erfindungsgemässe Warenferntransportanlage ermöglicht insgesamt einen energieeffizienten und kostengünstigen Warenferntransport zu Lande.

## Beschreibung

### Stand der Technik

Als Warenferntransport wird im folgenden der Transport von Waren über Distanzen von mehr als ungefähr 10 km bezeichnet.

Der landgestützte Warenferntransport wird heutzutage in überwiegendem Ausmass über Lastwagen und/oder über Eisenbahnen abgewickelt. Der Lastwagentransport ist vorteilhaft im Hinblick auf die grosse Flexibilität der Lastwagen. Weil das für den Lastwagentransport nutzbare Strassennetz wesentlich dichter ist als das Eisenbahnnetz, wird beim Lastwagentransport im Gegensatz zum Eisenbahntransport in den meisten Fällen eine Lieferung von Tür zu Tür ermöglicht. Im Vergleich zu Eisenbahnen weisen Lastwagen jedoch Nachteile auf sowohl in ökologischer Hinsicht als auch hinsichtlich des Energiebedarfs und hinsichtlich des Personalaufwandes (für jeden Lastwagen braucht es mindestens einen Chauffeur).

Eisenbahnen ermöglichen zwar im allgemeinen einen im Vergleich zum Lastwagentransport energieeffizienteren Warentransport, weil der Rollwiderstand bei Eisenbahnen wesentlich kleiner ist als der Rollwiderstand bei Strassenfahrzeugen. Der Vorteil hinsichtlich des Energiebedarfs wird jedoch durch das systembedingt grosse Gewicht der Eisenbahnwagen zunichte gemacht: Damit die in einem Zug angeordneten Eisenbahnwagen auch in leerem Zustand bei Kurvenfahrten nicht aufgrund der Zugkräfte entgleisen, müssen bereits die nicht angetriebenen Eisenbahnwagen relativ schwer ausgebildet sein. Auch hinsichtlich der Unempfindlichkeit gegen Windkräfte müssen die im Verhältnis zur Spurbreite relativ breiten und hohen Eisenbahnwagen schwer ausgebildet sein. Zudem müssen die Lokomotiven bekannterweise sogar sehr schwer ausgebildet sein, damit sie bei dem gegebenen, relativ kleinen Haftreibungskoeffizient zwischen den Rädern und den Schienen die erforderlichen Traktionskräfte auszuüben vermögen. Dies bedeutet, dass bei Eisenbahnen das Verhältnis des Gewichts der zu transportierenden Waren zum Gesamtgewicht eines Zuges vergleichsweise klein ist.

Ein weiterer Nachteil von Eisenbahnen besteht darin, dass vor einer Fahrt stets ein ganzer Zug zusammengestellt werden muss. Dies macht den Warentransport per Eisenbahn nicht nur unflexibler, sondern ist mit einem zusätzlichen Personal- und Energieaufwand verbunden, wobei kostenmässig vor allem der zusätzliche Personalaufwand negativ zu Buche schlägt.

Beim Containertransport und beim Umschlag von ganzen Sattelaufliegern von der Strasse auf die Bahn wird zwar der Nachteil der Unflexibilität des Warentransports per Eisenbahn etwas vermindert, der Nachteil hinsichtlich des grossen Gewichts bleibt jedoch bestehen.

Noch nachteiliger hinsichtlich des Personalaufwandes und des Transportgewichts präsentiert sich der sogenannte Huckepack-Transport (auch als rollende Landstrasse bezeichnet), wo ganze Lastwagen mitsamt Anhängern und Chauffeur auf der Bahn befördert werden. Hier muss pro transportierter Warentonne noch mehr unnötiger Zusatzballast befördert werden als beim konventionellen Eisenbahntransport, weil auf den wie oben erläutert systembedingt bereits schweren Eisenbahnwagen zusätzlich die Lastwagenanhänger, die Lastwagen und die Sattelschlepper mitbefördert werden.

### Darstellung der Erfindung

Aufgabe der vorliegenden Erfindung ist die Angabe einer Warenferntransportanlage, die einen energieeffizienten und kostengünstigen Warenferntransport zu Lande ermöglicht.

Die Lösung der Aufgabe ist Gegenstand des unabhängigen Patentanspruchs.

Gemäss der Erfindung zeichnet sich eine Warenferntransportanlage mit einem Verkehrsweg und einer Vielzahl von Transportfahrzeugen dadurch aus, dass die Transportfahrzeuge als selbstfahrende Tranporteinheiten zum führerlosen Fahren auf dem Verkehrsweg ausgebildet sind.

Die Transportfahrzeuge der erfindungsgemässen Warenferntransportanlage sind als selbstfahrende Transporteinheiten ausgebildet, d.h. sie umfassen je eigene Antriebsmittel zum Fahren. Unter einer selbstfahrenden Transporteinheit wird z.B. ein motorisierter Transportwagen, ein Lastkraftwagen, ein aus einem Lastkraftwagen und einem Anhänger zusammengesetzter Anhängerzug, ein Sattelschlepper mitsamt Auflieger usw. bezeichnet. Aufgrund der eigenen Antriebsmittel muss eine selbstfahrende Transporteinheit nicht durch andere Transportfahrzeuge und/oder durch spezielle Zugfahrzeuge gezogen werden. Anders ist dies bei Eisenbahnwagen. Eine Viehlzahl von gezogenen, nicht angetriebenen (und somit nicht als selbstfahrende Transporteinheiten ausgebildeten Eisenbahnwagen für den Warentransport werden durch eine einzige oder einige wenige Lokomotiven gezogen, die selbst nicht für den eigentlichen Warentransport ausgebildet sind. Damit die in langen Zügen angeordneten Eisenbahnwagen auch in leerem Zustand bei Kurvenfahrten nicht durch die Zugkräfte zum Entgleisen gebracht werden, müssen sie schwer ausgebildet sein. Im Gegensatz dazu entfällt bei den erfindungsgemässen Transportfahrzeugen das Erfordernis nach einem hohen Minimalgewicht. Sie sind deshalb vergleichsweise leichtgewichtig ausgebildet, was ein energiesparendes Fahren ermöglicht.

Die als selbstfahrende Transporteinheiten ausgebildeten Transportfahrzeuge der erfindungsgemässen Warenferntransportanlage sind zum führerlosen, automatischen Fahren ausgebildet. Dazu können entweder die einzelnen Transportfahrzeuge durch autonome Lenksysteme der Fahrzeuge gesteuert werden, welche z.B. Radargeräte, optische und/oder andere Sensoren umfassen, um das führerlose Fahren zu ermöglichen. Oder die Transportfahrzeuge können durch eine zentrale Steuerungsanlage der Warenferntransportanlage gesteuert werden. In beiden Fällen ist es durch eine entsprechende Ausbildung und/oder Programmierung der Lenksysteme bzw. der zentralen Steuerungsanlage möglich, das Fahren der Transportfahrzeuge derart zu steuern, dass ein weitgehend beschleunigungs- und verzögerungsfreier Verkehrsfluss gewährleistet wird. Die Transportfahrzeuge verkehren dann mit im wesentlichen konstanter Geschwindigkeit auf dem Verkehrsweg. Dadurch wird beim erfindungsgemässen Warenferntransport eine weitere Energieeinsparung erreicht.

Vorzugsweise sind die Transportfahrzeuge der erfindungsgemässen Warenferntransportanlage mit einem Elektromotor versehen und elektrisch angetrieben, wobei über Fahrleitungen mit elektrischer Energie versorgte Motoren gegenüber batteriebetriebenen Elektromotoren vorgezogen werden. Grundsätzlich können für die erfindungsgemässe Warenferntransportanlage jedoch auch anders angetriebene Transportfahrzeuge verwendet werden, so z.B. Fahrzeuge mit einem Dieselmotor, Fahrzeuge mit einem gasbetriebenen Motor, Fahrzeuge mit einem Benzinmotor, Fahrzeuge mit einer Brennstoffzelle usw.

Gemäss einer bevorzugten Ausführungsart der Erfindung umfasst der Verkehrsweg eine mit Strassenfahrzeugen befahrbare Fahrbahn. Eine solche Fahrbahn wird im folgenden als strassenähnliche Fahrbahn bezeichnet. Die strassenähnliche Fahrbahn gemäss dieser Ausführungsform der Erfindung ist insbesondere zum Befahren mit strassentauglichen, für den Warentransport ausgebildeten konventionellen Warentransportanhängern ausgebildet. Vorzugsweise umfassen bei dieser Ausführungsart der Erfindung wenigstens ein Teil der Transportfahrzeuge ein selbstfahrendes Zugfahrzeug und einen durch das Zugfahrzeug gezogenen, auf der strassenähnlichen Fahrbahn fahrenden strassentauglichen Warentransportanhänger. Die Transportfahrzeuge der Warenferntransportanlage gemäss dieser bevorzugten Ausführungsart der Erfindung bestehen somit aus Anhängerzügen, die einen konventionellen, für den Warentransport mittels Lastwagen ausgebildeten Anhänger und ein zum führerlosen Fahren ausgebildetes Zugfahrzeug umfassen. Bei den strassentauglichen Lastwagenanhängern kann es sich um Sattelauflieger oder um "gewöhnliche" gezogene Lastwagenanhänger handeln. Vorzugsweise sind die Zugfahrzeuge sowohl mit einer Sattelkupplung zum Ziehen eines gebräuchlichen Sattelaufliegers als auch mit einer Anhängerkupplung zum Ziehen eines gebräuchlichen gezogenen Anhängers oder eines Lastkraftwagens versehen.

Bei der oben erwähnten Ausführungsart der erfindungsgemässen Warenferntransportanlage mit einer strassenähnlichen Fahrbahn und Transportfahrzeugen in Form von Anhängerzügen kann nebst dem Warentransportanhänger auch das Zugfahrzeug zum Fahren auf der strassenähnlichen Fahrbahn ausgebildet sein. Vorzugsweise ist die Spurweite eines Zugfahrzeuges gemäss dieser Ausführungsart der Erfindung im Vergleich zur Spurweite von gebräuchlichen strassentauglichen Warentransportanhängern derart bemessen, dass die Zugfahrzeugsräder bei Geradeausfahrt im wesentlichen auf einem anderen Spurabschnitt der Fahrbahn rollen als die Anhängerräder. Dies kann beispielsweise dadurch erreicht werden, dass die Zugfahrzeuge eine wesentlich schmalere Spurweite aufweisen als übliche Lastwagenanhänger oder Sattelauflieger. Als Alternative kann für die Zugfahrzeuge auch eine breitere Spurweite vorgesehen sein als die übliche Spurweite von Anhängern. Durch diese Massnahme wird eine gleichmässige Fahrbahnabnutzung erreicht, weil dann im wesentlichen auf der gesamten Fahrbahnbreite Räder der Transportfahrzeuge abrollen, d.h., dass die zu transportierende Last gleichmässiger auf die gesamte Fahrbahnbreite verteilt wird. Bei einer anderen Variante der Erfindung wird eine gleichmässige Fahrbahnabnutzung erreicht, indem die zum führerlosen Fahren ausgebildeten Transportfahrzeuge derart gesteuert werden, dass sie jeweils auf unterschiedlichen Spuren innerhalb der der maximal zum Fahren vorgesehenen Fahrbahnbreite fahren. Zu diesem Zweck ist es möglich, jedes einzelne Fahrzeug mit einem Zufallsgenerator auszurüsten, um selbständig eine zufallsbedingte Fahrspur innerhalb der Fahrbahn auszuwählen. Falls ein zentrales Lenksystem zum Steuern der Transportfahrzeuge vorhanden ist kann die zu befahrende Fahrspur auch durch das zentrale Lenksystem jedem Transportfahrzeug zugewiesen werden. Im Gegensatz zu dieser Ausführungsart der Erfindung werden beim Warentransport mittels konventionellen Anhängerzügen im wesentlichen jeweils nur zwei relativ schmale Streifen der Strassenfahrbahn von den Rädern der Zugfahrzeuge und der Anhänger überrollt. Dies führt zur Ausbildung von Spurrillen und zur vorzeitigen Abnutzung im übermässig benutzten Bereich der Strassenfahrbahnen. Die Strassenfahrbahnen müssen dann jeweils vorzeitig erneuert werden, obwohl der mittlere, wenig beanspruchte Fahrbahnbereich eigentlich noch lange nicht abgenutzt wäre.

Im Falle einer Warenferntransportanlage mit einer strassenähnlichen Fahrbahn und elektrisch angetriebenen Transportfahrzeugen kann der überwiegende Teil des Verkehrsweges (insbesondere die Tunnels) mit einer elektrischen Oberleitung nach Art einer Trolleybus-Oberleitung ausgerüstet sein, um die Tranportfahrzeuge mit elektrischer Energie zu versorgen. Vorzugsweise sind die Transportfahrzeuge zusätzlich mit einer Batterie oder einem Hilfsaggregat ausgerüstet, um zu ermöglichen, dass sie im Bereich der Umschlagsterminals (bei den Ein- und Ausfahrten zum Verkehrsweg der Warenferntransportanlage) auch ohne Oberleitung fahren können. Dadurch wird vermieden, dass der Nahbereich der Umschlagsterminals, wo Möglichkeiten zum Manövrieren der Transportfahrzeuge vorhanden sein müssen, mit Oberleitungen und einer Vielzahl von Oberleitungsweichen ausgerüstet werden muss.

Gemäss einer weiteren bevorzugten Ausführungsart der erfindungsgemässen Warenferntransportanlage umfasst der Verkehrsweg ein zum Befahren mit Schienenfahrzeugen ausgebildetes Gleis. Vorzugsweise umfasst der Verkehrsweg zusätzlich eine strassenähnliche Fahrbahn. Das Gleis kann dann zwei Schienenstränge umfassen und die strassenähnliche Fahrbahn kann zwischen den beiden Schienensträngen derart angeordnet sein, dass die beiden Schienenstränge eine randseitige Begrenzung der strassenähnlichen Fahrbahn bilden. Vorzugsweise sind die Schienen nach Art von üblichen Eisenbahnschienen ausgebildet, wobei der Zwischenraum zwischen den Schienen im wesentlichen durch die Fahrbahn ausgefüllt ist. Bei dieser Anordnung sind die Räder von Fahrzeugen, die zum Fahren auf den Schienen vorgesehen sind, im Vergleich zu üblichen Eisenbahnrädern umgekehrt anzuordnen, d.h., dass die Radreifen kegelförmig derart auszubilden sind, dass der Kegelradius zur Radaussenseite hin zunimmt, und dass der Spurkranz an der Aussenseite der Räder anzuordnen ist. Im Gegensatz dazu nimmt bei üblichen kegelförmigen Eisenbahnrädern der Kegelradius zur Radinnenseite hin zu und ist der Spurkranz an der Radinnenseite angeordnet. Anstelle von Schienen nach Art von üblichen Eisenbahnschienen kann das Gleis der Warenferntransportanlage jedoch auch Rillenschienen (Vignolschienen), wie sie für Strassenbahnen gebräuchlich sind, oder andere geeignete Schienen umfassen.

Bei der oben erwähnten Ausführungsart der erfindungsgemässen Warenferntransportanlage mit einem Gleis umfassen die Transportfahrzeuge vorzugsweise Anhängerzüge mit einem Zugfahrzeug und einem Warentransportanhänger, wobei die Zugfahrzeuge als Schienenfahrzeuge zum Fahren auf dem Gleis ausgebildet sind. Bei der Ausführungsform der Erfindung mit einem Gleis und einer zusätzlichen strassenähnlichen Fahrbahn werden vorzugsweise strassentaugliche Warentransportanhänger von den auf dem Gleis fahrenden Zugfahrzeugen gezogen, wobei die Anhänger auf der strassenähnlichen Fahrbahn rollen. Die Zugfahrzeuge können wiederum sowohl mit einer Sattelkupplung zum Ziehen eines gebräuchlichen Sattelaufliegers als auch mit einer Anhängerkupplung zum Ziehen eines gebräuchlichen Anhängers oder eines Lastkraftwagens versehen sein. Es versteht sich von selbst, dass die schienengebundenen Zugfahrzeuge auch schienengebundene Warentransportanhänger ziehen können und zu diesem Zweck mit einer entsprechenden Anhängerkupplung versehen sein können. Die schienengebundenen Warentransportanhänger können u.a. auch für den Transport von üblichen Sattelaufliegern ausgebildet sein.

Bei denjenigen Ausführungsarten der Erfindung, bei denen strassentaugliche Warentransportanhänger auf eine strassenähnlichen Fahrbahn gezogen werden, werden die Warentransportanhänger beim Zugang zum Verkehrsweg der Warenferntransportanlage einer Eingangskontrolle unterzogen, um Pannen und Unfälle möglichst zu vermeiden. Im Falle des Tranports von Gefahrengütern können zusätzliche Kontrollen vorgesehen sein.

Vorzugsweise ist der Verkehrsweg der Warenferntransportanlage gemäss der Erfindung auf einem eigenen, von den öffentlich zugänglichen Verkehrswegen getrennten Trassee angeordnet und durch seitlich entlang des Verkehrsweges angebrachte Absperrvorrichtungen in Form von Zäunen oder Wänden abgesperrt. Die Absperrvorrichtungen können als geschlossener Mantel ausgebildet sein, welcher den Vekehrsweg nach Art eines gedeckten und allseitig geschlossenen Kanals umhüllt. Ein solcher Kanal, welcher den Verkehrweg mitsamt dem zum Befahren des Verkehrsweges durch die Transportfahrzeuge erforderlichen Lichtraumprofil seitlich, oben und unten umschliesst, wird im folgenden als Verkehrskanal bezeichnet.

Ein Verkehrskanal für eine Warenferntransportanlage gemäss einer bevorzugten Ausführungsform der Erfindung kann im Untergrund in einer Tunnelröhre angeordnet oder als Teil einer Tunnelröhre ausgebildet sein. Über Tag kann ein solcher Verkehrskanal als Röhrenbaute (Tagbautunnel) ausgeführt sein. Im Bereich der Start-, Ziel- und Verzweigungsorte der Warenferntransportanlage kann von einer Anordnung des Verkehrsweges in einem Verkehrskanal abgesehen werden, um das Manövrieren der Transportfahrzeuge zu erleichtern. Die Anordnung des Verkehrsweges in einem Verkehrskanal erleichtert zum einen das führerlose Fahren der Transportfahrzeuge.

Zum andern wird durch die Kapselung der Fahrbahn in einem Verkehrskanal auch die Unfallgefahr wesentlich vermindert, da durch den geschlossenen Mantel wirksam verhindert wird, dass irgendwelche Hindernisse in Form von anderen Verkehrsteilnehmern, Tieren, herunterfallenden Steinen etc. von aussen auf die Fahrbahn gelangen. Zudem wird im Falle eines Unfalles auch die Umwelt wirksam geschützt, da durch den geschlossenen Mantel des Verkehrskanals das Freisetzen von möglicherweise gefährlichen Gütern verhindert wird. Weil die Transportfahrzeuge führerlos im Verkehrskanal verkehren, ist zudem die Gefahr von Personenschäden im Falle eines Unfalls gering. Somit ist eine Warenferntransportanlage gemäss dieser bevorzugten Ausführungsform der Erfindung besonders für den Transport von gefährlichen Gütern besonders gut geeignet.

Die Anordnung des Verkehrsweges im wesentlichen in einer unter Tag verlaufenden Tunnelröhre bringt weitere Vorteile mit sich: ein Tunnel kann im Gegensatz zu einem an der Erdoberfläche angelegten Verkehrsweg der geometrisch kürzesten Verbindung zwischen einem Start- und einem Zielort folgen, was den kürzestmöglichen Transportweg zur Folge hat. Mit dieser Ausführungsart der Erfindung lässt sich eine weitere Energieeinsparung beim Warenferntransport aufgrund der verkürzten Transportwege erreichen. Zudem können die in Tunnels angeordneten Verkehrswege derart angelegt werden, dass sie bloss geringe Steigungen und praktisch keine Kurven aufweisen. Im Falle eines Verkehrsweges mit einer strassenähnlichen Fahrbahn ist deshalb keine grosse Adhäsion zwischen den Fahrzeugrädern und der strassenähnlichen Fahrbahn erforderlich, weil ja aufgrund des automatischen, führerlosen Betriebes auch keine grossen Beschleunigungen und/oder Verzögerungen beim Fahren auftreten. Dies erlaubt die Verwendung eines Belages für die Fahrbahn, der einen im Vergleich zu gebräuchlichen Strassenbelägen geringen Rollwiderstand für die Fahrzeugreifen bietet (und somit einen energieeffizienten Betrieb ermöglicht) und zudem eine lange Lebensdauer der Fahrbahn gewährleistet, was zur Reduktion der Unterhaltskosten für die Warenferntransportanlage beiträgt.

Vorzugsweise werden bei der oben erwähnten Ausführungsart der Erfindung die Verkehrswege in richtungsgetrennten Verkehrskanälen angeordnet, weil dann ein äusserst einfaches Belüftungskonzept für den Verkehrskanal verwendet werden kann.

Vorzugsweise nutzt die Belüftungsanlage die durch die Transportfahrzeuge im Verkehrskanal erzeugte Kolbenwirkung zur Belüftung des Verkehrskanals aus. Dies kann beispielsweise dadurch erreicht werden, im Falle eines in einem Tunnel angeordneten Verkehrskanals entlang des Verkehrskanals ein Frischluftkanal und ein von diesem getrennter Abluftkanal angeordnet werden, welche über entsprechend angeordnete Klappen in luftleitender Funktion mit dem Verkehrskanal verbunden sind. Eine separate Belüftung des Verkehrkanals ist mindestens im Normalfall nicht nötig, weil dann die auf der Kolbenwirkung der Transportfahrzeuge basierende Belüftung ausreicht.

Vorzugsweise sind der Mantel bzw. das Lichtraumprofil des Verkehrskanals derart bemessen, dass ein Transportfahrzeug maximal zugelassener Höhe und Breite gerade noch genügend Platz hat. Dadurch wird eine maximale Kolbenwirkung der Transportfahrzeuge erreicht.

Vorzugsweise ist bei einer Warenferntransportanlage gemäss der Erfindung das maximale Gefälle des Verkehrsweges derart begrenzt, dass für den Normalbetrieb kein Bremsen der Transportfahrzeuge erforderlich ist. Dadurch erübrigt es sich, die Transportfahrzeuge mit einer Vorrichtung zur Rekuperation der Bremsenergie zu versehen. Dies trägt zu einer weiteren Gewichtsreduktion der Transportfahrzeuge und zu einer Senkung der Herstellungskosten für die Transportfahrzeuge bei. Im übrigen ist die Rekuperation der Bremsenergie mit hohen Verlusten verbunden, die hier wegfallen.

Gemäss einer weiteren bevorzugten Variante der erfindungsgemässen Warenferntransportanlage ist wenigstens ein Transportfahrzeug als selbstfahrender Transportwagen für einen Frachtcontainer ausgebildet. Ein solcher Transportwagen kann im Vergleich zu einem für den Containertransport geeigneten strassentauglichen Lastwagen und insbesondere im Vergleich zu einem für den Containertransport geeigneten konventionellen Eisenbahnwagen einfach, leicht und kostengünstig ausgebildet sein.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen bevorzugte Ausführungsformen der vorliegenden Erfindung dar. Es zeigen:
- Fig. 1: eine Warenferntransportanlage gemäss einer bevorzugten Ausführungsform der Erfindung in einer geschnittenen Teilansicht von der Seite;
- Fig. 2: das in der Figur 1 dargestellte Transportfahrzeug in einer teilweise geschnittenen Ansicht von oben;
- Fig. 3: einen Querschnitt durch einen Tunnel für eine Warenferntransportanlage gemäss einer bevorzugten Ausführungsform der Erfindung;
- Fig. 4: einen Querschnitt durch einen Tunnel für eine Warenferntransportanlage gemäss einer weiteren bevorzugten Ausführungsform der Erfindung;
- Fig. 5: eine Warenferntransportanlage gemäss einer weiteren bevorzugten Ausführungsform der Erfindung in einer geschnittenen Teilansicht von der Seite;
- Fig. 6: einen Querschnitt durch einen Tunnel für die in Fig. 5 dargestellte Warenferntransportanlage.

Grundsätzlich sind in den Figuren gleiche Teile mit gleichen Bezugszeichen versehen.

### Wege zur Ausführung der Erfindung

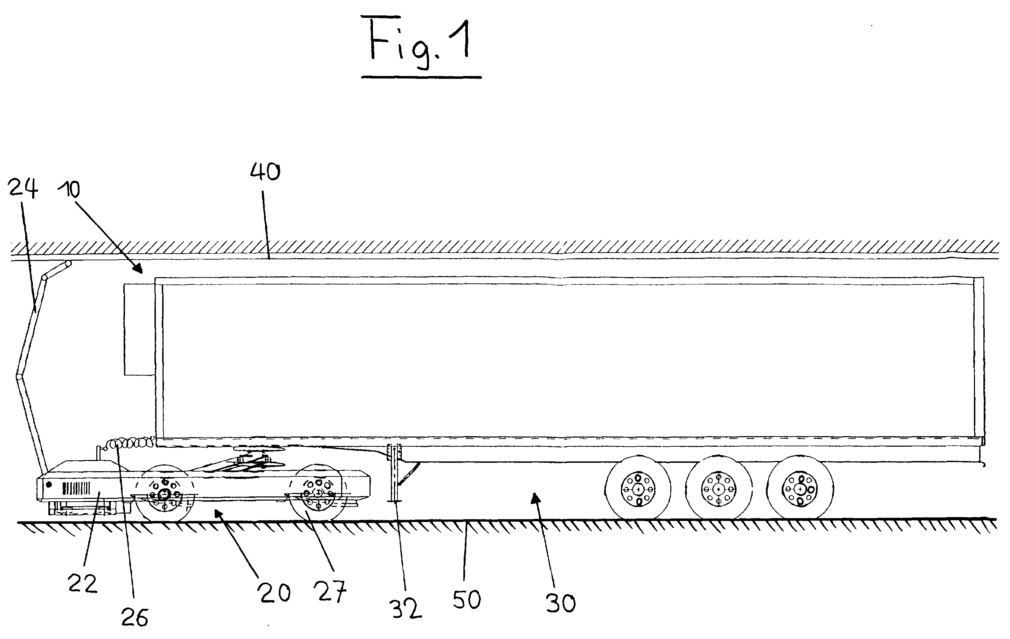

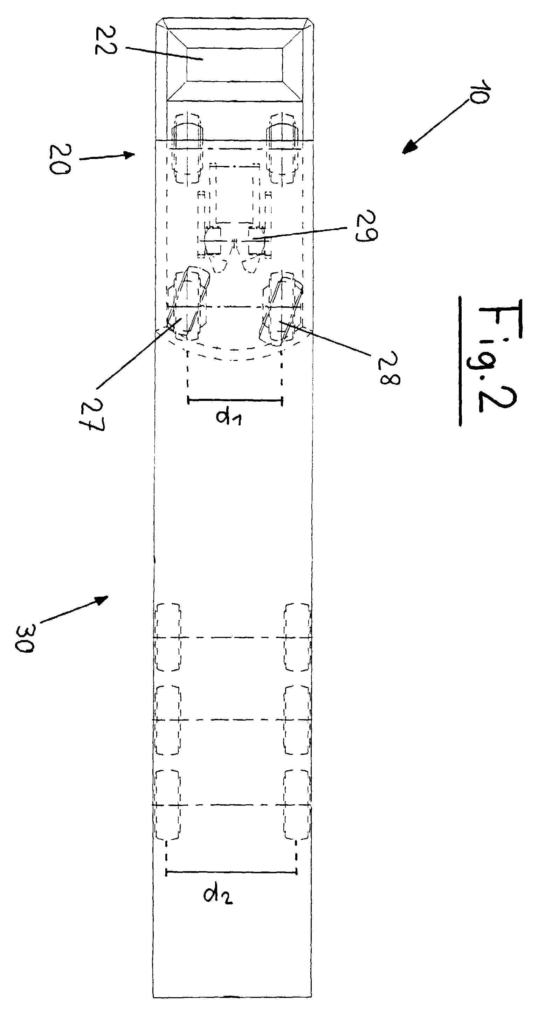

In der Figur 1 ist eine Warenferntransportanlage gemäss einer bevorzugten Ausführungsform der Erfindung in einer vereinfachten, geschnittenen Teilansicht von der Seite dargestellt. Die Warenferntransportanlage weist einen im wesentlichen in einem Tunnel angeordneten Verkehrsweg mit einer strassenähnlichen Fahrbahn 50 auf und eine Vielzahl von Transportfahrzeugen 10, von denen in den Figuren 1 und 2 eines als Beispiel dargestellt ist.

Das in den Figuren 1 und 2 dargestellte Transportfahrzeug 10 umfasst ein zum führerlosen Fahren ausgebildetes, selbstfahrendes Zugfahrzeug 20 und einen durch das Zugfahrzeug 20 gezogenen Warentransportanhänger 30 vom Typ eines Sattelaufliegers. Das Zugfahrzeug 20 ist mit Rädern und Reifen versehen, wie sie auch für gebräuchliche Lastwagen verwendet werden. Zur Verminderung des Rollwiderstandes sind die Reifen auf den zulässigen Maximaldruck aufgepumpt. Beim Sattelauflieger 30 handelt es sich um einen gebräuchlichen Warentransportanhänger 30, wie er auch für den Warentransport auf gewöhnlichen Strassen verwendet wird. Sowohl die Räder des Zugfahrzeuges 20 als auch die Räder des Sattelaufliegers 30 rollen beim Fahren des Transportfahrzeuges auf der strassenähnlichen Fahrbahn 50 des Verkehrsweges der erfindungsgemässen Warenferntransportanlage.

Als Antriebsquelle zum Fahren ist das Zugfahrzeug 20 mit einem Elektromotor 22 ausgerüstet. Das Zugfahrzeug 20 weist weiter einen Stromabnehmer 24 auf, welcher eine an der Tunneldecke angeordnete elektrische Speiseleitung 40 kontaktiert, um den Elektromotor 22 des Zugfahrzeuges 20 mit elektrischer Energie zu versorgen. Die elektrische Speiseleitung 40 kann nach Art von für elektrische Eisenbahnen bekannten Leitungen oder Stromschienen ausgebildet sein. Bei alternativen Ausführungsformen der Erfindung können auch Stromschienen an den Seitenwänden oder am Boden angeordnet sein.

Die Speiseleitung 40 oder Fahrleitung 40 kann gleichzeitig als Kommunikationsleitung dienen, um einerseits Daten vom Transportfahrzeug 10 an eine zentrale Steuerungsanlage zur Steuerung der Warenferntransportanlage und andrerseits Steuerungsbefehle von der zentralen Steuerungsanlage an das Transportfahrzeug 10 zu übertragen. Für die Kommunikation zwischen den Transportfahrzeugen und der zentralen Steuerungsanlage und zu Überwachungszwecken können weitere Datenübertragungsleitungen entlang des Verkehrsweges angeordnet sein. Zudem kann zur Kommunikation zwischen dem Transportfahrzeug 10 und der zentralen Steuerungsanlage auch eine Funkschnittstelle vorgesehen sein. Vorzugsweise umfasst die Warenferntransportanlage Datenübertragungsmittel, die derart ausgebildet sind, dass eine Steuerung des Tunnelbetriebs von aussen (remote control) ermöglicht wird.

Die Transportfahrzeuge 10 der in den Figuren 1 und 2 dargestellten Warenferntransportanlage werden durch eine zentrale Steuerungsanlage derart gesteuert, dass sie mit im wesentlichen konstanter Geschwindigkeit von ca. 15 m/s auf der Fahrbahn 50 fahren. Die Zugfahrzeuge 20 sind für den Transport von für den europäischen Gütertransport gebräuchlichen Sattelaufliegern 30 konstruiert, die vollbeladen mitsamt der Ladung ungefähr 30 t wiegen. Das maximale Gefälle des Verkehrsweges der Warenferntransportanlage ist auf dem grössten Teil des Verkehrsweges auf ca. 1 % begrenzt. Dadurch ist im Normalbetrieb kein Bremsen der Transportfahrzeuge 10 auf dem Verkehrsweg 50 erforderlich, wodurch es sich erübrigt, die Transportfahrzeuge 10 mit einer Vorrichtung zur Rekuperation der Bremsenergie zu versehen. Nur die Ein- und Ausfahrtsrampen in der Nähe der Umschlagsterminals weisen ein grösseres Gefälle auf, so dass die Transportfahrzeuge dort mit kleinerer Geschwindigkeit verkehren. Dies wirkt sich jedoch kaum auf die Gesamtfahrtzeit der Transportfahrzeuge 10 aus und kann deshalb problemlos hingenommen werden. Der Elektromotor 22 des Zugfahrzeuges 20 ist derart dimensioniert, dass das Zugfahrzeug 20 einen Warentransportanhänger 30 mit dem maximal zulässigen Gesamtgewicht von 30 t mit einer Geschwindigkeit von ca. 15 m/s auf einer Fahrbahn 50 mit einer Steigung von ca. 1 % zu ziehen imstande ist. Im Bereich der steileren Ein- und Ausfahrtrampen wird bloss eine kleinere Geschwindigkeit erreicht. Das entsprechend ausgebildete Zugfahrzeug 20 wiegt mitsamt dem Motor 22 ungefähr 8 t. Bei einer anderen Ausführungsform der Erfindung wiegt ein Zugfahrzeug bloss 3.5 t. Die oben aufgeführten Parameter sind für eine alpendurchquerende Warenferntransportanlage zwischen Freiburg i.Br. (Deutschland) und Novarra (Italien) ausgelegt.

Das Zugfahrzeug 20 ist weiter mit einem elektrischen Anschluss ausgerüstet, der es ermöglicht, über eine entsprechende Leitung 26 den Warentransportanhänger 30 mit elektrischer Energie zu versorgen, um beispielsweise den Betrieb von Kühlgeräten, Überwachungsgeräten und/oder einer Beleuchtung im Warentransportanhänger 30 zu gewährleisten.

Das in den Figuren 1 und 2 dargestellte Zugfahrzeug 20 weist eine vordere und eine hintere Fahrzeugachse auf Die Lenkung des Zugfahrzeuges 20 erfolgt über die lenkbaren Räder 27, 28 an der hinteren Fahrzeugachse. Durch diese Hinterachslenkung wird eine gute Manövrierbarkeit des Transportfahrzeuges 10 erreicht, was insbesondere im Bereich der Umschlagsterminals vorteilhaft ist.

Die Spurweite d1 des Zugfahrzeuges 20 misst ungefähr 150 cm, was beträchtlich weniger ist als die Spurweite d2 des Warentransportanhängers 30, die ca. 200 cm misst. Dadurch ist gewährleistet, dass die Zugfahrzeugsräder bei Geradeausfahrt im zumindest teilweise auf einem anderen Spurabschnitt der Fahrbahn 50 rollen als die Anhängerräder.

Das Zugfahrzeug 20 ist mit einer Kupplungsplattform 29 zur Aufnahme einer standartisierten Kupplungsvorrichtung des Sattelaufliegers 30 ausgerüstet. Die Kupplungsplattform 29 ist derart auf dem Zugfahrzeug 20 angeordnet, dass die Last des Zugfahrzeuges 20 und des auf dieses drückenden Sattelaufliegers 30 ungefähr gleichmässig auf die beiden Fahrzeugachsen des Zugfahrzeuges 20 verteilt wird. Durch die gleichmässige Achsbelastung wird eine Schonung der Fahrbahn 50 und somit eine längere Lebensdauer derselben erreicht. Bei einer nicht in den Figuren dargestellten Variante der Erfindung ist die Kupplungsplattform in Fahrzeuglängsrichtung verstellbar auf dem Zugfahrzeug angebracht, um durch eine an den Druck des Aufliegers angepasste Einstellung des Auflagepunktes des Sattelaufliegers auf dem Zugfahrzeug eine optimale Verteilung der aus dem Gewicht des Zugfahrzeuges und dem Druck des Aufliegers zusammengesetzten Gesamtlast auf die beiden Fahrzeugachsen des Zugfahrzeuges zu erreichen.

Die Kupplungsplattform 29 ist in der Höhe verstellbar auf dem in den Figuren 1 und 2 dargestellten Zugfahrzeug 20 angeordnet. Dadurch wird ein äusserst einfacher und rascher Umschlag des zu transportierenden Warentransportanhängers 30 zwischen den Lastwagen bzw. den Sattelschlepper-Strassenzugfahrzeugen, welche den Lokaltransport in der Umgebung des Startortes und des Zielortes auf der Strasse durchführen, und der Warenferntransportanlage, welche den Warenferntransport von einem Startterminal zu einem Zielterminal ausführt, ermöglicht. Zunächst wird der zu transportierende Sattelauflieger 30 (Warentransportanhänger 30) mittels eines gebräuchlichen Sattelschlepper-Strassenzugfahrzeuges von einem Startort über Strassen zum nächstgelegenen Umschlagsterminal der Warenferntransportanlage befördert. Beim Terminal wird der Sattelauflieger 30 an einem für die Zugfahrzeuge 10 der Warenferntransportanlage zugänglichen Standplatz vom Sattelschlepper-Strassenzugfahrzeug entkuppelt und auf seine Stützfüsse 32 abgestellt. Anschliessend fährt das Zugfahrzeug 20 der Warenferntransportanlage mit seiner in der Höhe verstellbaren Kupplungsplattform 29 unter die entsprechende Kupplungsvorrichtung des Sattelaufliegers 30, kuppelt den Sattelauflieger 30 an und hebt die Kupplungsplattform 29 mitsamt dem darauf aufliegenden Teil des Sattelaufliegers 30 soweit an, dass der Sattelauflieger 30 mit ausgefahrenen Stützfüssen 32 gezogen und befördert werden kann. Ein Einklappen und/oder Verstellen der Stützfüsse 32 des Sattelaufliegers 30 ist nicht erforderlich. Danach wird der Warenferntransport auf dem Verkehrsweg der Warenferntransportanlage durchgeführt und der Sattelauflieger 30 an einem Standplatz beim Zielterminal auf seine Stützfüsse 32 abgesetzt. Von dort wird der Sattelauflieger 30 (Warentransportanhänger 30) von einem Sattelschlepper-Strassenzugfahrzeug abgeholt und über Strassen an seinen Bestimmungsort befördert.

Bei einer nicht in den Zeichnungen dargestellten Variante der Erfindung können die bei den Umschlagsterminals angeordneten Standplätze für die Sattelauflieger mit einer vertikal verstellbaren Hubplattform ausgerüstet sein, auf welche die Stützfüsse 32 des Sattelaufliegers 30 abgestellt werden, um sowohl die Kupplungsvorgänge zwischen den Zugfahrzeugen 10 der Warenferntransportanlage und den Sattelaufliegern 30 als auch zwischen den Sattelschlepper-Strassenzugfahrzeugen und den Sattelaufliegern 30 zu erleichtern.

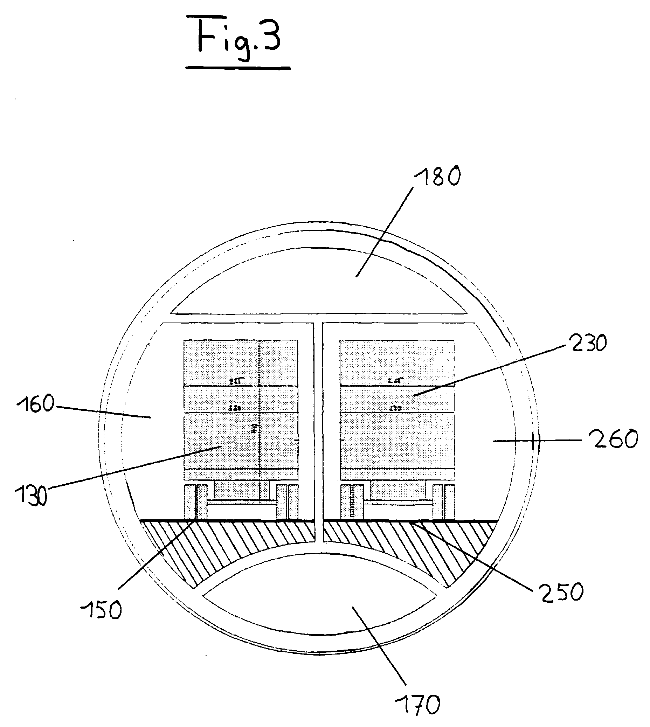

In der Figur 3 ist ein Querschnitt durch einen Tunnel für eine erfindungsgemässe Warenferntransportanlage abgebildet, der zwei voneinander getrennte, separat gekapselte strassenähnliche Fahrbahnen 150, 250 umfasst, um einen richtungsgetrennten Betrieb in einem einzigen Tunnel zu ermöglichen. Dazu ist der Tunnel mit einem im wesentlichen kreisrunden Querschnitt in vier voneinander abgetrennte Kanäle 160, 260, 170, 180 unterteilt. Die beiden nebeneinander angeordneten Verkehrskanäle 160, 260 mit im wesentlichen rechteckigem Querschnitt bilden die geschlossenen Verkehrskanäle für zwei richtungsgetrennte Verkehrswege der Warenferntransportanlage und umschliessen je eine strassenähnliche Fahrbahn 150, 250 mitsamt dem zum Befahren der Fahrbahn erforderlichen Lichtraumprofil. Zur Veranschaulichung der Grössenverhältnisse ist in der Figur 3 in vereinfachter schematischer Darstellung in jedem der beiden Verkehrskanäle 160, 260 je ein Warentransportanhänger 130, 230 im Querschnitt dargestellt. Unterhalb der beiden Verkehrskanäle ist im Bereich der Tunnelsohle ein Rettungs- und Unterhaltskanal 170 angeordnet, der mit Spezialfahrzeugen befahrbar ist. Der Rettungs- und Unterhaltskanal 170 ist mit einer separaten Lüftung ausgerüstet und steht im Vergleich zu den Verkehrskanälen 160, 260 unter einem Überdruck. Der Rettungs- und Unterhaltskanal 170 ist weiter mit Ausgängen zu den Verkehrskanälen 160, 260 versehen und dient im Falle von Pannen, Unfällen usw. dem Zugang zu den Verkehrskanälen 160, 260. Im Bereich der Tunneldecke ist über den beiden Verkehrskanälen 160, 260 als weiterer abgetrennter Kanal ein Leitungskanal 180 angeordnet, der zur Aufnahme der elektrischen Speiseleitungen, der Datenübertragungsleitungen und für weitere Zwecke (z.B. Notbelüftung) vorgesehen ist.

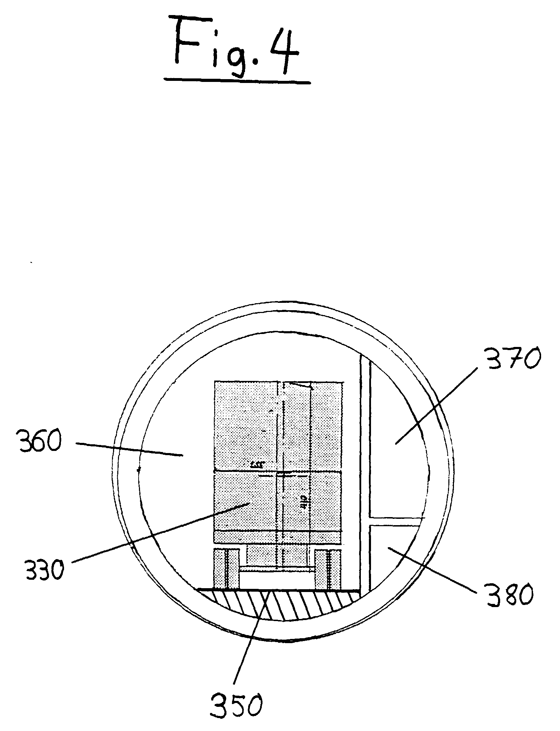

Die Abbildung der Figur 4 stellt einen Tunnelquerschnitt für eine Warenferntransportanlage gemäss einer weiteren Variante der Erfindung dar. Der Tunnel umfasst einen Verkehrakanal 360 mit einer strassenähnlichen Fahrbahn, welcher den Hauptanteil des Tunnelquerschnittes einnimmt. Zur Veranschaulichung der Grössenverhältnisse ist im Verkehrskanal 360 wiederum in vereinfachter schematischer Darstellung ein Warentransportanhänger 330 im Querschnitt dargestellt. Seitlich neben dem Verkehrskanal 360 sind unten ein abgetrennter Leitungskanal 380 und oben ein abgetrennter Rettungs- und Unterhaltskanal 370 angeordnet.

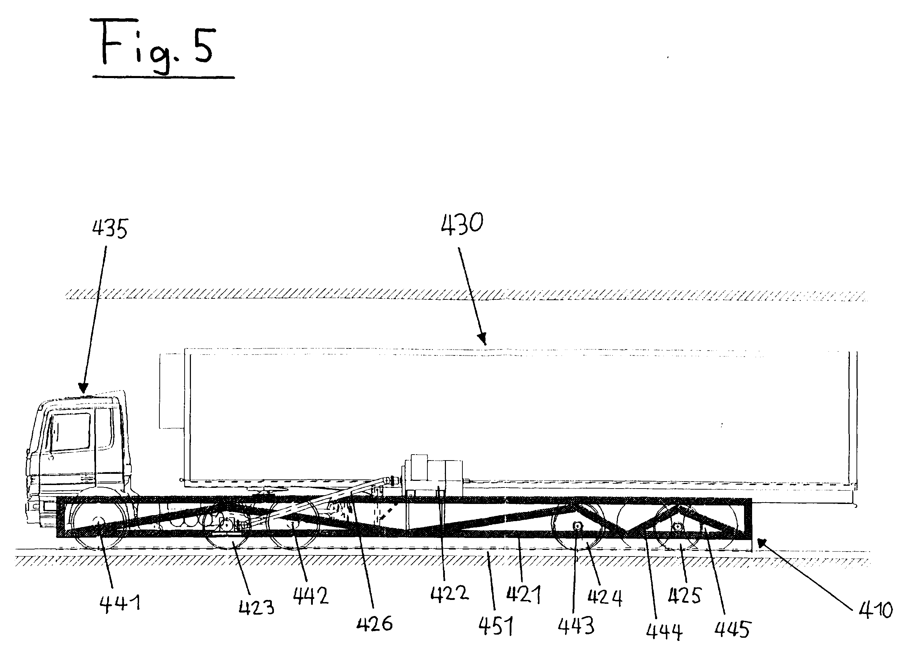

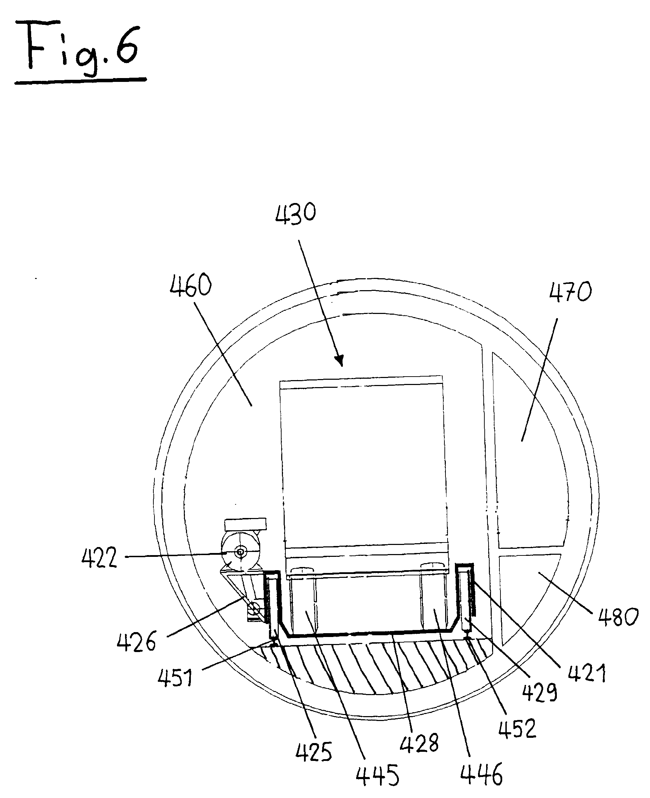

In der Figur 5 ist eine Warenferntransportanlage gemäss einer weiteren bevorzugten Ausführungsform der Erfindung in einer geschnittenen Teilansicht von der Seite, dargestellt und die Figur 6 zeigt einen Querschnitt durch einen Tunnel für die in der Figur 5 dargestellte Warenferntransportanlage.

Die in den Figuren 5 und 6 dargestellte Warenferntransportanlage weist einen im wesentlichen in einem Verkehrskanal 460 eines Tunnels angeordneten Verkehrsweg mit einem zwei Schienenstränge 451, 452 umfassenden Gleis auf, das zum Befahren mit Schienenfahrzeugen 410 ausgebildet ist. Der Querschnitt des in der Figur 6 dargestellten Tunnels ist ähnlich wie derjenige des in der Figur 4 dargestellten Tunnels. Seitlich neben dem Verkehrskanal 460 sind unten ein abgetrennter Leitungskanal 480 und oben ein abgetrennter Rettungs- und Unterhaltskanal 470 angeordnet.

Die in den Figuren 5 und 6 dargestellte Warenferntransportanlage umfasst weiter eine Vielzahl von Transportfahrzeugen 410, von denen in den Figuren 5 und 6 eines als Beispiel dargestellt ist. Das Transportfahrzeug 410 besteht aus einem äusserst einfachen, selbstfahrenden Transportwagen 410, der zur Aufnahme eines Sattelschleppers 435 mitsamt Auflieger 430 ausgebildet ist. Bei dem in den Figuren 5 und 6 dargestellten Beispiel weist der Sattelschlepper 435 zwei und der Auflieger drei Achsen auf, die mit gebräuchlichen Lastwagenrädern 441, 442, 443, 444, 445, 446 ausgerüstet sind. Der Transportwagen 410 weist sechs Eisenbahnräder 423, 424, 425, 429 mit an den Radaussenseiten angeordneten Spurkränzen auf. Die Räder 423, 424, 425, 429 sind einzeln am Chassis 421 des Transportwagens 410 angebracht, dies im Gegensatz zu gebräuchlichen Eisenbahnwagen, wo jeweils die Räder paarweise mit einer durchgehenden Achse miteinander verbunden sind. Die Einzelradaufhängung erlaubt es, die zum Befahren mit Lastwagen und Sattelschleppern ausgebildete Plattform 428 tief am Chassis 421 des Transportwagens 410 anzuordnen. Die Plattform 428 ist bei dem in den Figuren 5 und 6 dargestellten Transportwagen 410 deutlich unterhalb der Radachsen der Räder 423, 424, 425, 429 des Transportwagens 410 angeordnet. Beim Transportwagen 410 handelt es sich somit um einen TiefbettSchienenwagen 410.

Der Transportwagen 410 wird durch einen seitlich am Chassis 421 angeordneten Elektromotor 422 angetrieben, wobei die Antriebskraft über eine mit zwei Kreuzgelenken versehene Kardanwelle 426 vom Motor 422 auf ein Antriebsrad 423 des Transportwagens 410 übertragen wird.

Zusammenfassend ist festzustellen, dass durch die Erfindung eine Warenferntransportanlage geschaffen wird, die einen energieeffizienten und kostengünstigen Warenferntransport zu Lande ermöglicht.

## Patentansprüche

1. Warenferntransportanlage mit einem Verkehrsweg und einer Vielzahl von Transportfahrzeugen (10), dadurch gekennzeichnet, dass die Transportfahrzeuge (10) als selbstfahrende Transporteinheiten zum führerlosen Fahren auf dem Verkehrsweg ausgebildet sind.

2. Warenferntransportanlage nach Anspruch 1, dadurch gekennzeichnet, dass der Verkehrsweg eine zum Befahren mit strassentauglichen Warentransportanhängern (30) ausgebildete strassenähnliche Fahrbahn (50) umfasst.

3. Warenferntransportanlage nach Anspruch 2, dadurch gekennzeichnet, dass wenigstens ein Transportfahrzeug (10) ein selbstfahrendes Zugfahrzeug (20) und einen durch das Zugfahrzeug (20) gezogenen, auf der strassenähnlichen Fahrbahn (50) fahrenden strassentauglichen Warentransportanhänger umfasst.

4. Warenferntransportanlage nach Anspruch 3, dadurch gekennzeichnet, dass das Zugfahrzeug (20) zum Fahren auf der strassenähnlichen Fahrbahn (50) ausgebildet ist und seine Spurweite (d1) im Vergleich zur Spurweite (d2) von gebräuchlichen strassentauglichen Warentransportanhängern (30) derart bemessen ist, dass die Zugfahrzeugsräder bei Geradeausfahrt im wesentlichen auf einem anderen Spurabschnitt der Fahrbahn (50) rollen als die Anhängerräder.

5. Warenferntransportanlage nach einem der Ansprüche 1 bis 4, dadurch gekennzeichnet, dass der Verkehrsweg ein zum Befahren mit Schienenfahrzeugen ausgebildetes Gleis umfasst.

6. Warenferntransportanlage nach Anspruch 2 und Anspruch 5, dadurch gekennzeichnet, dass das Gleis zwei Schienen umfasst und die strassenähnliche Fahrbahn zwischen den beiden Schienen derart angeordnet ist, dass die beiden Schienen eine randseitige Begrenzung der strassenähnlichen Fahrbahn bilden.

7. Warenferntransportanlage nach Anspruch 3 und einem der Ansprüche 5 oder 6, dadurch gekennzeichnet, dass das Zugfahrzeug ein zum Fahren auf dem Gleis ausgebildetes Schienenfahrzeug ist.

8. Warenferntransportanlage nach einem der Ansprüche 1 bis 7, dadurch gekennzeichnet, dass der Verkehrsweg im wesentlichen in einem Verkehrskanal (160; 260; 360) mit einem geschlossenen Mantel angeordnet ist.

9. Warenferntransportanlage nach Anspruch 8, gekennzeichnet durch eine Belüftungsanlage, welche für eine Belüftung des Verkehrskanals (160; 260; 360) zur Ausnutzung der durch die Transportfahrzeuge (130; 230; 330) im Verkehrskanal erzeugten Kolbenwirkung ausgebildet ist.

10. Warenferntransportanlage nach einem der Ansprüche 1 bis 9, dadurch gekennzeichnet, dass wenigstens ein Transportfahrzeug als selbstfahrender Transportwagen für einen Frachtcontainer ausgebildet ist.

11. Warenferntransportanlage nach einem der Ansprüche 1 bis 10, gekennzeichnet durch eine Begrenzung des maximalen Gefälles des Verkehrsweges derart, dass für den Normalbetrieb kein Bremsen der Transportfahrzeuge erforderlich ist.
